(19) Europäisches Patentamt
European Patent Office
Office européen des brevets

(11) **EP 4 704 239 A1**

(12) **EUROPEAN PATENT APPLICATION**
published in accordance with Art. 153(4) EPC

(43) Date of publication:
**04.03.2026 Bulletin 2026/10**

(21) Application number: **23934547.3**

(22) Date of filing: **27.04.2023**

(51) International Patent Classification (IPC):
**H01M 50/342** (2021.01)    **H01M 50/30** (2021.01)
**H01M 50/102** (2021.01)

(52) Cooperative Patent Classification (CPC):
Y02E 60/10

(86) International application number:
**PCT/CN2023/091254**

(87) International publication number:
**WO 2024/221351 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ningde Amperex Technology Limited
Ningde, Fujian 352100 (CN)**

(72) Inventor: **CHEN, Tengteng
Ningde, Fujian 352100 (CN)**

(74) Representative: **Kraus & Lederer PartGmbB
Thomas-Wimmer-Ring 15
80539 München (DE)**

(54) **ELECTROCHEMICAL APPARATUS AND ELECTRONIC DEVICE**

(57)    An electrochemical apparatus, including a housing, the housing includes an L-shaped first wall, and the first wall includes a first region. The first region is enclosed by a first connecting line, a first boundary line, a first reference line, and a second boundary line. A pressure relief zone is disposed in the first region. In this application, the first region is a region of the first wall of the housing that undergoes severe deformation during gas generation and expansion of the electrochemical apparatus. Through provision of the pressure relief zone in the first region, the pressure relief zone is prone to forming an opening for pressure relief when an internal pressure of the housing increases and deformation occurs, thereby enabling the electrochemical apparatus to have a good explosion-proof effect.

FIG. 2

EP 4 704 239 A1

**Description**

**TECHNICAL FIELD**

This application relates to the technical field of batteries, and in particular, to an electrochemical apparatus and an electronic device.

**BACKGROUND**

Electrochemical apparatuses (such as lithium-ion batteries or sodium-ion batteries) are prone to gas generation and expansion under abusive conditions such as short circuits, high temperatures, and overcharging. If the generated gas cannot be released in time, the electrochemical apparatus may swell, deform, or even explode, posing a risk to personal safety.

**SUMMARY**

In view of this, this application provides an electrochemical apparatus and an electronic device to improve the use safety of the electrochemical apparatus.

According to a first aspect of this application, an electrochemical apparatus is provided, including a housing. The housing includes a first wall, and the first wall is L-shaped. The first wall includes a first long edge, a second long edge, a third short edge, a fourth short edge, a fifth short edge, and a sixth short edge connected in sequence, where the first long edge, the third short edge, and the fifth short edge extend along a first direction, and the second long edge, the fourth short edge, and the sixth short edge extend along a second direction. The first long edge and the second long edge are connected at a first vertex, the fifth short edge and the sixth short edge are connected at a second vertex, and the third short edge and the fourth short edge are connected at a third vertex. A line connecting the first vertex to the second vertex is a first connecting line, a line connecting the first vertex to the third vertex is a second connecting line, and a length of the first connecting line is less than or equal to a length of the second connecting line. A reference point is selected on a first reference line passing through a midpoint of the second connecting line and extending along the first direction, a distance from the reference point to the midpoint of the second connecting line is equal to a distance from the reference point to a midpoint of the first connecting line, and a first boundary line is an arc with the reference point as a center and the distance from the reference point to the midpoint of the second connecting line as a radius. A second reference line passing through the reference point and extending along the second direction intersects the first connecting line at a first intersection point, and a second boundary line is an arc with the reference point as a center and the distance from the reference point to the first intersection point as a radius. The first wall includes a first region, the first region is enclosed by the first connecting line, the first boundary line, the first reference line, and the second boundary line; and a pressure relief zone is disposed in the first region.

The inventor of this application has found through research that, due to the structural specificity of an L-shaped electrochemical apparatus, deformation in the first region is particularly severe during gas generation and expansion of the electrochemical apparatus. Through provision of the pressure relief zone in the first region, the pressure relief zone can promptly form an opening for pressure relief during gas generation and expansion of the electrochemical apparatus, providing a good explosion-proof effect, thereby improving the use safety of the L-shaped electrochemical apparatus.

In some embodiments, the first region includes a second intersection point at which the second boundary line connects to the first reference line, a first midpoint is a midpoint of a line connecting the second intersection point to the midpoint of the second connecting line, and the first region includes a central arc, where the central arc is an arc with the reference point as a center and a distance from the reference point to the first midpoint as a radius; and the pressure relief zone intersects the central arc at a third intersection point. Due to the presence of an inner corner in the structure of the L-shaped electrochemical apparatus (that is, an angle formed by the fourth short edge and the fifth short edge), a crease is prone to forming at the central arc in the first region during gas generation and expansion of the L-shaped electrochemical apparatus. The pressure relief zone is arranged to intersect the central arc, so that when the first wall deforms, the pressure relief zone is prone to forming an opening for pressure relief, thereby improving the use safety of the L-shaped electrochemical apparatus.

In some embodiments, the pressure relief zone has a first tangent at the third intersection point, the central arc has a second tangent at the third intersection point, and a minimum angle between the first tangent and the second tangent is $\alpha$, where $\alpha$ satisfies $0° \leq \alpha < 90°$. The angle $\alpha$ between the tangent of the pressure relief zone and the tangent of the central arc at the intersection point thereof is controlled to be non-perpendicular, so that during gas generation and expansion of the electrochemical apparatus, a crease formed at the central arc facilitates the opening of the pressure relief zone, thereby enabling timely pressure relief and further improving the use safety of the L-shaped electrochemical apparatus.

In some embodiments, $10° \leq \alpha \leq 70°$. When $\alpha \leq 70°$, it facilitates further promotion of the opening of the pressure relief zone during gas generation and expansion of the electrochemical apparatus, enabling timely pressure relief, thereby further improving the use safety of the L-shaped electrochemical apparatus. In addition, when $\alpha \geq 10°$, it facilitates the prevention of premature pressure relief that could lead to failure of the electrochemical apparatus, thereby improving the service life of the electrochemical apparatus.

In some embodiments, a distance between the reference point and the first intersection point is less than a distance between the reference point and the midpoint of the second connecting line.

In some embodiments, the pressure relief zone includes at least one of an indentation, a groove, or a material region with lower strength than a surrounding region of the material region.

In some embodiments, an angle between the fourth short edge and the fifth short edge is $\beta$, where $\beta$ satisfies $80° \leq \beta \leq 100°$.

In some embodiments, the first wall further includes an arc-shaped edge connected between the fourth short edge and the fifth short edge.

In some embodiments, the pressure relief zone is arc-shaped.

In some embodiments, the pressure relief zone includes a bottom wall surface, a width of the bottom wall surface is w, a thickness from the bottom wall surface to an inner surface of the first wall is h1, and a thickness of a region of the first wall excluding the pressure relief zone is h2, where at least one of the following conditions is satisfied: (1) $0.5 \leq w/h1 \leq 3$; (2) $1/4 \leq h1/h2 \leq 3/4$; (3) $0.05\ mm \leq h1 \leq 0.12\ mm$; (4) $0.1\ mm \leq h2 \leq 0.2\ mm$; or (5) $0.05\ mm \leq w \leq 0.2\ mm$.

According to a second aspect of this application, an electronic device is provided, including the electrochemical apparatus described in any one of the above embodiments. Therefore, the electronic device of this application has high use safety.

## BRIEF DESCRIPTION OF DRAWINGS

To describe the technical solutions in some embodiments of this application more clearly, the following briefly describes the accompanying drawings required for describing some embodiments. Apparently, the accompanying drawings in the following description show only some embodiments of this application, and persons skilled in the art may still derive other drawings from these accompanying drawings.

FIG. 1 is a schematic structural diagram of a first wall according to an embodiment of this application;
FIG. 2 is a schematic structural diagram of a first wall provided with a pressure relief zone according to an embodiment of this application;
FIG. 3 is a schematic cross-sectional view of a pressure relief zone disposed on a first wall according to an embodiment of this application;
FIG. 4 is a schematic structural diagram of a pressure relief zone in an arc-shaped according to an embodiment of this application;
FIG. 5 is a schematic structural diagram of a pressure relief zone disposed on a left side of a first region in Comparative Example 1 of this application;
FIG. 6 is a schematic structural diagram of a pressure relief zone disposed on a right side of a first region in Comparative Example 2 of this application; and
FIG. 7 is a schematic structural diagram of a pressure relief zone disposed in a first region in Example 1 of this application.

Reference signs:

100. first wall; 110. first region; 120. pressure relief zone; A. central arc;
101. first long edge; 102. second long edge; 103. third short edge; 104. fourth short edge; 105. fifth short edge; 106. sixth short edge; 107. arc-shaped edge; 121. bottom wall surface; 122. side wall surface;
10a. first vertex; 10b. second vertex; 10c. third vertex; 10d. first midpoint; 10f. first intersection point; 10g. second intersection point; 10h. third intersection point; O. reference point;
B1. first connecting line; B2. second connecting line; B3. first tangent; B4. second tangent;
C1. first reference line; C2. second reference line; C3. first boundary line; C4. second boundary line;
X. first direction; and Y. second direction.

**DETAILED DESCRIPTION**

To make the objectives, technical solutions, and advantages of this application more comprehensible, the following further describes this application in detail with reference to the accompanying drawings and embodiments. It should be understood that the specific embodiments described herein are merely used to explain this application but are not intended to limit this application.

In the accompanying drawings of some embodiments of this application, identical or similar reference signs correspond to identical or similar components. In the description of this application, it should be understood that the orientations or positional relationships indicated by the terms "upper", "lower", "left", and "right" and the like are based on the orientations or positional relationships shown in the accompanying drawings. These terms are merely for ease and brevity of description of this application rather than indicating or implying that the apparatuses or elements mentioned must have specific orientations or must be constructed or manipulated according to specific orientations. Therefore, terms describing positional relationships in the accompanying drawings are used for illustrative purposes only and should not be construed as limiting this application. Persons of ordinary skill in the art can understand the specific meanings of the above terms as appropriate to specific situations.

Some embodiments of this application provide an electrochemical apparatus and an electronic device capable of effectively improving the pressure relief stability of an L-shaped electrochemical apparatus, thereby improving the use safety of the electrochemical apparatus and the electronic device.

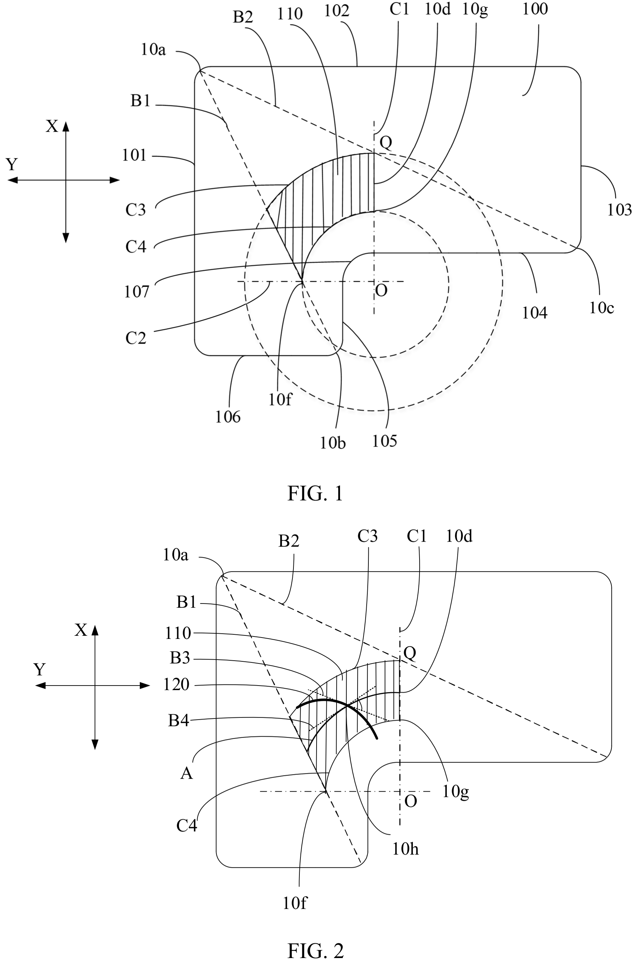

As shown in FIG. 1, a schematic structural diagram of an electrochemical apparatus provided by an embodiment of this application is illustrated. The electrochemical apparatus includes a housing, and the housing includes a first wall 100 and a second wall (not shown) opposite each other, and a peripheral side wall (not shown) located between the first wall 100 and the second wall. The first wall 100, the peripheral side wall, and the second wall define an accommodating space. The electrochemical apparatus further includes an electrode assembly and an electrolyte (not shown), and the electrode assembly and the electrolyte are accommodated within the accommodating space of the housing.

The first wall 100 is L-shaped, and a length of the first wall 100 in a first direction X may be equal to or different from a length of the first wall 100 in a second direction Y. For example, the length of the first wall 100 in the first direction X is less than the length of the first wall 100 in the second direction Y.

Specifically, the first wall 100 includes a first long edge 101, a second long edge 102, a third short edge 103, a fourth short edge 104, a fifth short edge 105, and a sixth short edge 106 connected in sequence; where the first long edge 101, the third short edge 103, and the fifth short edge 105 extend along the first direction X, and the second long edge 102, the fourth short edge 104, and the sixth short edge 106 extend along the second direction Y. The first direction X forms an angle with the second direction Y, for example, the first direction X is perpendicular to the second direction Y. The second wall has a structure similar to that of the first wall 100, and the two are connected by the peripheral side wall to define the accommodating space.

The first wall 100 includes a first region 110, and the first region 110 is enclosed by a first connecting line B1, a first boundary line C3, a first reference line C1, and a second boundary line C4. Specifically, the first long edge 101 and the second long edge 102 are connected at a first vertex 10a, the fifth short edge 105 and the sixth short edge 106 are connected at a second vertex 10b, and the third short edge 103 and the fourth short edge 104 are connected at a third vertex 10c; and a line connecting the first vertex 10a to the second vertex 10b is the first connecting line B1, a line connecting the first vertex 10a to the third vertex 10c is the second connecting line B2, and a length of the first connecting line B1 is less than or equal to a length of the second connecting line B2. A reference point O is selected on a first reference line C1 passing through a midpoint Q of the second connecting line B2 and extending along the first direction X, where a distance from the reference point O to the midpoint Q of the second connecting line B2 is equal to a distance from the reference point O to a midpoint of the first connecting line B1, and the first boundary line C3 is an arc with the reference point O as a center and the distance from the reference point O to the midpoint Q of the second connecting line B2 as a radius; and a second reference line C2 passing through the reference point O and extending along the second direction Y intersects the first connecting line B1 at a first intersection point 10f, and the second boundary line C4 is an arc with the reference point O as a center and a distance from the reference point O to the first intersection point 10f as a radius. The inventor of this application has found through research that, due to the structural specificity of the L-shaped electrochemical apparatus, deformation in the first region 110 is particularly severe during internal abnormal gas generation and expansion of the electrochemical apparatus. Therefore, in the electrochemical apparatus of this application, a pressure relief zone 120 is disposed in the first region 110. Through provision of the pressure relief zone 120 in the first region 110, the pressure relief zone 120 can promptly form an opening for pressure relief during internal abnormal gas generation and expansion of the electrochemical apparatus, providing a good explosion-proof effect, thereby improving the use safety of the L-shaped electrochemical apparatus.

In this application, the first region 110 is provided with the pressure relief zone 120. When an internal pressure of the housing reaches a pressure relief pressure $P_0$ (for example, $P_0$ satisfies: $0.5\,\text{MPa} \leq P_0 \leq 2.0\,\text{MPa}$), the housing swells and deforms, and the pressure relief zone 120 can form a pressure relief opening, thereby preventing the electrochemical apparatus from exploding.

Optionally, the first region 110 includes a second intersection point 10g at which the second boundary line C4 connects to the first reference line C1, and a first midpoint 10d is a midpoint of a line connecting the second intersection point 10g to the midpoint Q of the second connecting line B2. The first region 110 includes a central arc A, and the central arc A is an arc with the reference point O as a center and a distance from the reference point O to the first midpoint 10d as a radius. The pressure relief zone 120 intersects the central arc A. The inventor of this application has found through research that, due to the presence of an inner corner in the structure of the L-shaped electrochemical apparatus (that is, an angle formed by the fourth short edge 104 and the fifth short edge 105), a crease is prone to forming at the central arc A during gas generation and expansion of the L-shaped electrochemical apparatus. The pressure relief zone 120 is arranged to intersect the central arc A, so that when the first wall 100 deforms, the pressure relief zone 120 is prone to forming an opening for pressure relief, thereby improving the use safety of the L-shaped electrochemical apparatus.

As shown in FIG. 2, the pressure relief zone 120 intersects the central arc A at a third intersection point 10h, the pressure relief zone 120 has a first tangent B3 at the third intersection point 10h, the central arc A has a second tangent B4 at the third intersection point 10h, and a minimum angle between the first tangent B3 and the second tangent B4 is $\alpha$, where the first tangent B3 intersects the second tangent B4 to form two angles, and an angle $\alpha$ is the smaller of the two angles in terms of degree. Furthermore, the minimum angle $\alpha$ between the first tangent B3 and the second tangent B4 satisfies: $0° \leq \alpha < 90°$. For example, $\alpha$ may be $0°$, $10°$, $30°$, $50°$, $70°$, $85°$, or a range defined by any two of these values. At this time, during gas generation and expansion of the electrochemical apparatus, a crease formed at the central arc A facilitates the formation of an opening at the pressure relief zone 120, thereby enabling timely pressure relief and further improving the use safety of the electrochemical apparatus.

When the pressure relief zone 120 produces a large opening during pressure relief, the pressure relief effect is good. However, there is a risk of premature pressure relief due to an increase in local pressure, which may reduce the service life of the electrochemical apparatus. Therefore, preferably, the minimum angle $\alpha$ between the first tangent B3 and the second tangent B4 satisfies $10° \leq \alpha \leq 70°$, when $\alpha \leq 70°$, it facilitates the crease during gas generation and expansion of the electrochemical apparatus to promote the opening of the pressure relief zone 120, enabling timely pressure relief, thereby further improving the use safety of the L-shaped electrochemical apparatus. In addition, when $\alpha \geq 10°$, it facilitates the prevention of premature pressure relief that could lead to failure of the electrochemical apparatus, thereby improving the service life of the electrochemical apparatus.

Optionally, a distance L1 between the reference point O and the first intersection point 10f is less than a distance L2 between the reference point O and the midpoint Q of the second connecting line B2, thus allowing a larger range for the first region 110, making the disposition of the pressure relief zone 120 more flexible to meet different pressure relief requirements.

Optionally, an angle between the fourth short edge 104 and the fifth short edge 105 is $\beta$, where $\beta$ satisfies $80° \leq \beta \leq 100°$. For example, $\beta$ may include $80°$, $85°$, $90°$, $95°$, $100°$, or a range defined by any two of these values.

The first wall 100 further includes an arc-shaped edge 107 connected between the fourth short edge 104 and the fifth short edge 105 to reduce a risk of rupture at the inner corner of the first wall 100 during swelling caused by the internal gas generation of the electrochemical apparatus, thereby improving the use safety of the electrochemical apparatus. Furthermore, the arc-shaped edge 107 connected between the fourth short edge 104 and the fifth short edge 105 is a circular arc-shaped edge.

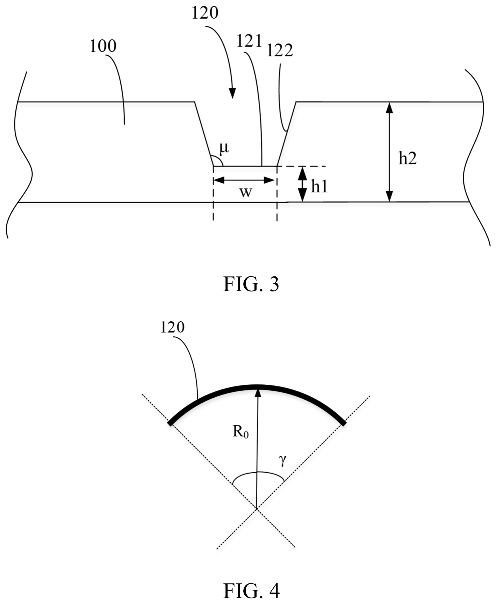

Optionally, as shown in FIG. 4, the pressure relief zone 120 is arc-shaped to facilitate the formation of a pressure relief opening at the pressure relief zone 120 when the first wall 100 deforms due to internal gas generation and expansion of the electrochemical apparatus. Furthermore, a central angle of the arc-shaped pressure relief zone 120 is $\gamma$, and $\gamma$ satisfies $30° \leq \gamma \leq 270°$. The pressure relief zone 120 is configured as an arc with unconnected ends to prevent the region enclosed by the pressure relief zone 120 from separating from other parts of the first wall 100 and being pushed out by airflow after an opening is formed at the pressure relief zone 120, thereby improving safety. Preferably, $\gamma$ satisfies $30° \leq \gamma \leq 180°$ to allow for an arc with a larger radius, making it easier for the pressure relief zone 120 to form a pressure relief opening. Optionally, the pressure relief zone 120 is circular arc-shaped, elliptical arc-shaped, or a combination of circular arc-shaped and elliptical arc-shaped.

Optionally, a material of the first wall 100 may include metal, such as steel or aluminum.

Optionally, the pressure relief zone 120 may be disposed on at least one of an inner surface or an outer surface of the first wall 100.

Optionally, the pressure relief zone 120 includes at least one of an indentation, a groove, or a material region with lower strength than a surrounding region of the material region, so as to facilitate the formation of a pressure relief opening at the pressure relief zone 120. For example, a thickness of the pressure relief zone 120 is less than a thickness of other regions of the first wall 100, allowing for a lower strength of the pressure relief zone 120. Alternatively, the pressure relief zone 120 is made of a material that is more prone to fracture than those used in other regions of the first wall 100. When the pressure relief zone 120 includes an indentation or a groove, it may be processed by laser etching.

As shown in FIG. 3, the pressure relief zone 120 includes a bottom wall surface 121, a width of the bottom wall surface 121 is w, a thickness from the bottom wall surface 121 to an inner surface of the first wall 100 is h1, and a thickness of a region of the first wall 100 excluding the pressure relief zone 120 is h2. Optionally, $0.5 \leq w/h1 \leq 3$. For example, w/h1 may be 0.5, 0.9, 1.2, 2.0, or 3.0. When w/h1 satisfies $0.5 \leq w/h1 \leq 3$, the width of the bottom wall surface 121 is appropriate. On one hand, this facilitates the formation of a pressure relief opening at the pressure relief zone 120 for timely pressure relief. On the other hand, this effectively maintains the structural strength of the first wall 100, preventing the bottom wall surface 121 from being too wide, which could lead to excessively low structural strength of the pressure relief zone 120, affecting the normal use of the electrochemical apparatus.

Optionally, $1/4 \leq h1/h2 \leq 3/4$. For example, h1/h2 may be 1/4, 1.5/4, 2/4, 2.5/4, or 3/4. When h1 and h2 satisfy $1/4 \leq h1/h2 \leq 3/4$, the thickness of the pressure relief zone 120 is appropriate relative to the thickness of the region of the first wall 100 excluding the pressure relief zone 120, ensuring that the pressure relief zone 120 has suitable structural strength to not easily form an opening, and an opening for gas exhaust and pressure relief can be promptly formed when the pressure in the accommodating space of the housing reaches the pressure relief pressure.

Optionally, $0.05\,mm \leq h1 \leq 0.12\,mm$. For example, h1 may be 0.05 mm, 0.06 mm, 0.08 mm, 0.10 mm, or 0.12 mm.

Optionally, $0.1\,mm \leq h2 \leq 0.2\,mm$. For example, h2 may be 0.1 mm, 0.13 mm, 0.15 mm, 0.176 mm, or 0.2 mm.

Optionally, $0.05\,mm \leq w \leq 0.2\,mm$. For example, w may be 0.1 mm, 0.12 mm, 0.14 mm, 0.18 mm, or 0.2 mm.

The pressure relief zone 120 further includes two side wall surfaces 122, and the two side wall surfaces 122 are oppositely disposed and connected to opposite sides of the bottom wall surface 121. Each side wall surface 122 forms an angle with the bottom wall surface 121, and the angle between the side wall surface 122 and the bottom wall surface 121 is $\mu$, where $\mu$ satisfies $90° \leq \mu \leq 120°$. For example, $\mu$ may be 90°, 100°, 105°, 110°, or 120°. Preferably, in an extension direction of the pressure relief zone 120, a cross-sectional profile of the pressure relief zone 120 is trapezoidal, making it easier for the pressure relief zone 120 to form a pressure relief opening.

In the following embodiments, an L-shaped steel-shell lithium-ion battery is used as an example to describe the electrochemical apparatus of this application. In each embodiment, a length of the first long edge 101 of the L-shaped steel-shell lithium-ion battery is 57.6 mm, a length of the second long edge 102 is 78.5 mm, a length of the third short edge 103 is 37.3 mm, a length of the fourth short edge 104 is 47.7 mm, a length of the fifth short edge 105 is 20.3 mm, and a length of the sixth short edge 106 is 30.8 mm. The angle $\beta$ between the fourth short edge 104 and the fifth short edge 105 is 90°.

A thickness of the housing is 0.15 mm, and the pressure relief zone 120 has a circular arc-shaped indentation, where the circular arc-shaped indentation is processed by laser etching. A radius $R_0$ of the circular arc-shaped indentation is 8 mm, a central angle $\gamma$ is 90°, a cross-sectional shape of the circular arc-shaped indentation along its extension direction is trapezoidal, angles $\mu$ between the two side wall surfaces 122 and the bottom wall surface 121 of the circular arc-shaped indentation both equal to 110°, a width w of the bottom wall surface 121 is 0.15 mm, a thickness h1 from the bottom wall surface 121 to an inner surface of the first wall 100 is 0.055 mm, and a thickness h2 of a region of the first wall 100 excluding the pressure relief zone 120 is 0.15 mm.

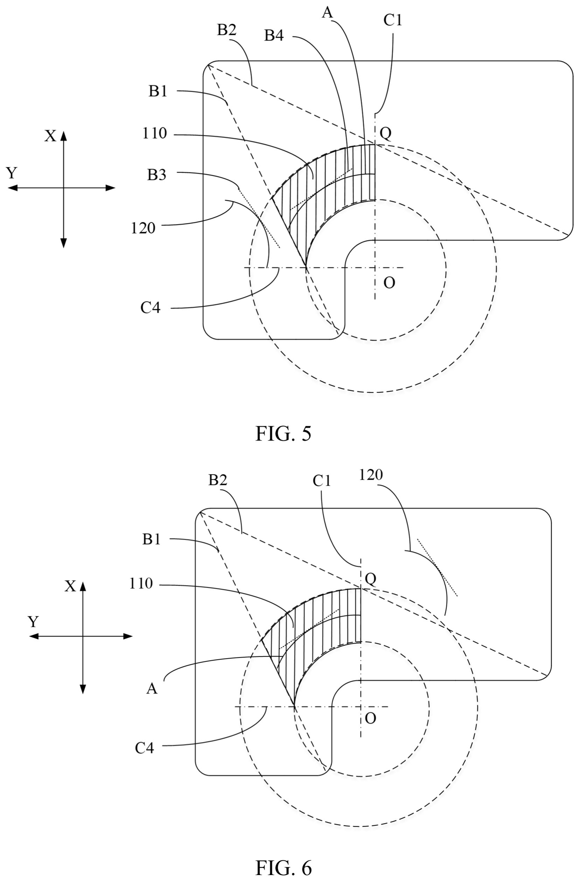

In Comparative Example 1, as shown in FIG. 5, the pressure relief zone 120 is disposed on a side of the first connecting line B1 away from the second connecting line B2.

In Comparative Example 2, as shown in FIG. 6, the pressure relief zone 120 is disposed on a side of the second connecting line B2 away from the first connecting line B1.

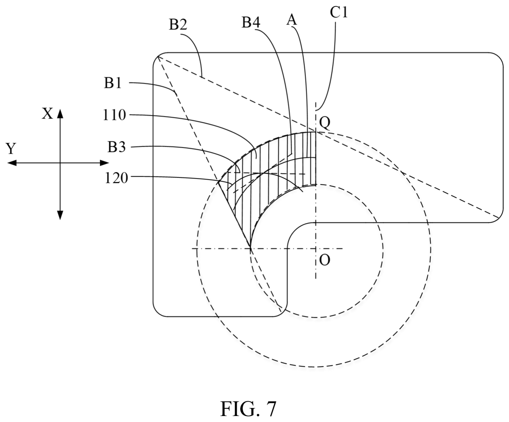

In Example 1, as shown in FIG. 7, the pressure relief zone 120 is disposed in the first region 110, and an angle $\alpha$ between the first tangent B3 and the second tangent B4 is 30°. In the first direction X, a distance from the third intersection point 10h to the sixth short edge 106 is 26 mm, and in the second direction Y, a distance from the third intersection point 10h to the first long edge 101 is 21 mm.

In Example 2, the difference from Example 1 is that the angle $\alpha$ between the first tangent B3 and the second tangent B4 is 90°.

In Example 3, the difference from Example 1 is that the angle $\alpha$ between the first tangent B3 and the second tangent B4 is 70°.

In Example 4, the difference from Example 1 is that the angle $\alpha$ between the first tangent B3 and the second tangent B4 is 50°.

In Example 5, the difference from Example 1 is that the angle $\alpha$ between the first tangent B3 and the second tangent B4 is 30°.

In Example 6, the difference from Example 1 is that the angle $\alpha$ between the first tangent B3 and the second tangent B4 is 10°.

In Example 7, the difference from Example 1 is that the angle $\alpha$ between the first tangent B3 and the second tangent B4 is 0°.

Experimental data for examples and comparative examples are shown in Table 1 below.

**Table 1**

| Item | Whether pressure relief zone is in first region | Angle $\alpha$ | Number of tests | Average relief pressure (MPa) | Pressure relief effect |
|---|---|---|---|---|---|
| Comparative Example 1 | No, on left side | / | 10 | 3.5 | Greater than pressure relief upper limit |
| Comparative Example 2 | No, on right side | / | 10 | 2.6 | Greater than pressure relief upper limit |
| Example 1 | Yes | 30° | 10 | 0.9 | Large-hole pressure relief |
| Example 2 | Yes | 90° | 10 | 1.9 | Approximate pressure relief upper limit, small-hole pressure relief |
| Example 3 | Yes | 70° | 10 | 1.8 | Approximate pressure relief upper limit, large-hole pressure relief |
| Example 4 | Yes | 50° | 10 | 1.4 | Large-hole pressure relief |
| Example 5 | Yes | 45° | 10 | 1.2 | Large-hole pressure relief |
| Example 6 | Yes | 10° | 10 | 0.9 | Large-hole pressure relief |
| Example 7 | Yes | 0° | 10 | 0.8 | Large-hole pressure relief |

According to Comparative Examples 1, 2, and Examples 1 to 7 in Table 1 above, it can be learned that when the indentation of the pressure relief zone 120 is disposed in the first region 110, the indentation of the pressure relief zone 120 can promptly form an opening for gas exhaust and pressure relief under the pressure relief pressure $P_0$ ($0.5\,MPa \leq P_0 \leq 2.0$ MPa) required by the electrochemical apparatus. Moreover, when the indentation of the pressure relief zone 120 intersects the central arc A, the indentation of the pressure relief zone 120 is more prone to forming an opening.

In Example 2, when the angle $\alpha$ between the first tangent B3 and the second tangent B4 is 90°, only small-hole pressure relief is achieved. However, according to Examples 1 and 3 to 7, when the angle $\alpha$ between the first tangent B3 and the second tangent B4 ranges from 0° to 70°, the pressure relief zone 120 can achieve large-hole pressure relief at the required pressure relief pressure $P_0$ ($0.5\,MPa \leq P_0 \leq 2.0$ MPa), indicating that during gas generation and expansion of the electrochemical apparatus, this configuration is more facilitates to promoting the opening of the pressure relief zone 120, thereby enabling timely pressure relief and further improving the use safety of the L-shaped lithium-ion battery.

The electrochemical apparatus according to this application includes any apparatus in which electrochemical reactions take place. Specific examples of the apparatus include all kinds of primary batteries and secondary batteries. Especially, the electrochemical apparatus is a lithium secondary battery, including a lithium metal secondary battery, a lithium-ion secondary battery, a lithium polymer secondary battery, or a lithium-ion polymer secondary battery.

Some embodiments of this application further provide an electronic device, including the electrochemical apparatus as described above. The electronic device may be a mobile phone, a tablet computer, a laptop computer, a personal digital assistant, an augmented reality device, a virtual reality device, an artificial intelligence device, a wearable device, an in-vehicle device, a smart home device, and/or a smart city device. A specific type of the electronic device is not specially limited in some embodiments of this application.

Specifically, the electronic device may include components such as an outer shell, a screen, a circuit board, and an electrochemical apparatus, where the screen, the circuit board, and the electrochemical apparatus are all installed in the outer shell, and the electrochemical apparatus is the electrochemical apparatus described in any of the above embodiments.

The above descriptions are merely preferable embodiments of this application, but are not intended to limit this application. Any modification, equivalent replacement, or improvement made without departing from the spirit and principle of this application shall fall within the protection scope of this application.

**Claims**

1.    An electrochemical apparatus, comprising a housing, **characterized in that**, the housing comprises a first wall, the

**EP 4 704 239 A1**

first wall being L-shaped; the first wall comprises a first long edge, a second long edge, a third short edge, a fourth short edge, a fifth short edge, and a sixth short edge connected in sequence, wherein the first long edge, the third short edge, and the fifth short edge extend along a first direction, and the second long edge, the fourth short edge, and the sixth short edge extend along a second direction;

the first long edge and the second long edge are connected at a first vertex, the fifth short edge and the sixth short edge are connected at a second vertex, and the third short edge and the fourth short edge are connected at a third vertex; a line connecting the first vertex to the second vertex is a first connecting line, a line connecting the first vertex to the third vertex is a second connecting line, and a length of the first connecting line is less than or equal to a length of the second connecting line;
a reference point is selected on a first reference line passing through a midpoint of the second connecting line and extending along the first direction, wherein a distance from the reference point to the midpoint of the second connecting line is equal to a distance from the reference point to a midpoint of the first connecting line, and a first boundary line is an arc with the reference point as a center and the distance from the reference point to the midpoint of the second connecting line as a radius; a second reference line passing through the reference point and extending along the second direction intersects the first connecting line at a first intersection point, and a second boundary line is an arc with the reference point as a center and a distance from the reference point to the first intersection point as a radius; and
the first wall comprises a first region, the first region being enclosed by the first connecting line, the first boundary line, the first reference line, and the second boundary line; and a pressure relief zone is disposed in the first region.

2. The electrochemical apparatus according to claim 1, **characterized in that**, the first region comprises a second intersection point at which the second boundary line connects to the first reference line, a first midpoint is a midpoint of a line connecting the second intersection point to the midpoint of the second connecting line, and the first region comprises a central arc, the central arc being an arc with the reference point as a center and a distance from the reference point to the first midpoint as a radius; and the pressure relief zone intersects the central arc at a third intersection point.

3. The electrochemical apparatus according to claim 2, **characterized in that**, the pressure relief zone has a first tangent at the third intersection point, the central arc has a second tangent at the third intersection point, and a minimum angle between the first tangent and the second tangent is $\alpha$, wherein $\alpha$ satisfies $0° \leq \alpha < 90°$.

4. The electrochemical apparatus according to claim 3, **characterized in that**, $10° \leq \alpha \leq 70°$.

5. The electrochemical apparatus according to claim 1, **characterized in that**, a distance between the reference point and the first intersection point is less than a distance between the reference point and the midpoint of the second connecting line.

6. The electrochemical apparatus according to claim 1, **characterized in that**, the pressure relief zone comprises at least one of an indentation, a groove, or a material region with lower strength than a surrounding region of the material region.

7. The electrochemical apparatus according to claim 1, **characterized in that**, the electrochemical apparatus satisfies at least one of the following conditions:

(1) an angle between the fourth short edge and the fifth short edge is $\beta$, wherein $\beta$ satisfies $80° \leq \beta \leq 100°$; or
(2) the first wall further comprises an arc-shaped edge connected between the fourth short edge and the fifth short edge.

8. The electrochemical apparatus according to claim 1, **characterized in that**, the pressure relief zone is arc-shaped.

9. The electrochemical apparatus according to claim 1, **characterized in that**, the pressure relief zone comprises a bottom wall surface, a width of the bottom wall surface being w, a thickness from the bottom wall surface to an inner surface of the first wall being h1, and a thickness of a region of the first wall excluding the pressure relief zone being h2; and at least one of the following conditions is satisfied:

(1)

$$0.5 \leq w/h1 \leq 3;$$

(2)

$$1/4 \leq h1/h2 \leq 3/4;$$

(3)

$$0.05 \text{ mm} \leq h1 \leq 0.12 \text{ mm};$$

(4)

$$0.1 \text{ mm} \leq h2 \leq 0.2 \text{ mm};$$

or
(5)

$$0.05 \text{ mm} \leq w \leq 0.2 \text{ mm}.$$

10. An electronic device, comprising the electrochemical apparatus according to any one of claims 1 to 9.

FIG. 1

FIG. 2

FIG. 3

FIG. 4

FIG. 5

FIG. 6

FIG. 7

## INTERNATIONAL SEARCH REPORT

| International application No. |
|---|
| **PCT/CN2023/091254** |

| A. | CLASSIFICATION OF SUBJECT MATTER |
|---|---|

H01M50/342(2021.01)i; H01M50/30(2021.01)i; H01M50/102(2021.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ISI; CNKI: 电池, 壳, 箱, 包装, L形, L型, 台阶, 阶梯, 异形, 异型, 不规则, 非矩形, 泄压, 防爆, 撕裂, 劈裂, 破裂, 应力, 弱, batter+, pouch, hous+, package, irregular+, L, step+, type, shaped, relief, tear, stress, frail, weak

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113544890 A (NINGDE AMPEREX TECHNOLOGY LTD.) 22 October 2021 (2021-10-22)<br>description, paragraphs [0003]-[0161], and figure 5 | 1, 5-7, 9, 10 |
| A | CN 113544890 A (NINGDE AMPEREX TECHNOLOGY LTD.) 22 October 2021 (2021-10-22)<br>description, paragraphs [0003]-[0161], and figure 5 | 2-4, 8 |
| A | CN 109873092 A (NINGDE AMPEREX TECHNOLOGY LTD.) 11 June 2019 (2019-06-11)<br>entire document | 1-10 |
| A | CN 111261826 A (NINGDE AMPEREX TECHNOLOGY LTD.) 09 June 2020 (2020-06-09)<br>entire document | 1-10 |
| A | CN 105977373 A (DAISHINKU CORP.) 28 September 2016 (2016-09-28)<br>entire document | 1-10 |
| A | CN 112567561 A (APPLE INC.) 26 March 2021 (2021-03-26)<br>entire document | 1-10 |

| ☑ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 November 2023** | **05 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| PCT/CN2023/091254 |

**C. DOCUMENTS CONSIDERED TO BE RELEVANT**

| Category* | Citation of document, with indication, where appropriate, of the relevant passages | Relevant to claim No. |
|---|---|---|
| A | CN 115882125 A (NINGDE CONTEMPORARY AMPEREX TECHNOLOGY CO., LTD.) 31 March 2023 (2023-03-31) entire document | 1-10 |
| A | JP 2001035466 A (OSAKA GAS CO., LTD.) 09 February 2001 (2001-02-09) entire document | 1-10 |
| A | JP 2014060098 A (HITACHI MAXELL, LTD.) 03 April 2014 (2014-04-03) entire document | 1-10 |

Form PCT/ISA/210 (second sheet) (July 2022)

**INTERNATIONAL SEARCH REPORT**
Information on patent family members

International application No.

**PCT/CN2023/091254**

| Patent document cited in search report | | | Publication date (day/month/year) | Patent family member(s) | | | Publication date (day/month/year) |
|---|---|---|---|---|---|---|---|
| CN | 113544890 | A | 22 October 2021 | WO | 2022032473 | A1 | 17 February 2022 |
| | | | | EP | 4170803 | A1 | 26 April 2023 |
| | | | | US | 2023198070 | A1 | 22 June 2023 |
| CN | 109873092 | A | 11 June 2019 | US | 2021218051 | A1 | 15 July 2021 |
| | | | | US | 11444331 | B2 | 13 September 2022 |
| | | | | EP | 3937270 | A1 | 12 January 2022 |
| | | | | WO | 2020173268 | A1 | 03 September 2020 |
| | | | | JP | 2022500834 | A | 04 January 2022 |
| | | | | JP | 7102613 | B2 | 19 July 2022 |
| CN | 111261826 | A | 09 June 2020 | CN | 111261826 | B | 10 January 2023 |
| CN | 105977373 | A | 28 September 2016 | CN | 105977373 | B | 05 June 2020 |
| | | | | US | 10044339 | B2 | 07 August 2018 |
| | | | | JP | 6565671 | B2 | 28 August 2019 |
| | | | | CN | 111180572 | A | 19 May 2020 |
| CN | 112567561 | A | 26 March 2021 | EP | 3847705 | A1 | 14 July 2021 |
| | | | | US | 2020075992 | A1 | 05 March 2020 |
| | | | | US | 11114697 | B2 | 07 September 2021 |
| | | | | WO | 2020050992 | A1 | 12 March 2020 |
| CN | 115882125 | A | 31 March 2023 | None | | | |
| JP | 2001035466 | A | 09 February 2001 | JP | 4348492 | B2 | 21 October 2009 |
| JP | 2014060098 | A | 03 April 2014 | None | | | |

Form PCT/ISA/210 (patent family annex) (July 2022)